## Europäisches Patentamt
## European Patent Office
## Office européen des brevets

(19)

(11) Publication number: **0 081 001**

**A1**

(12) # EUROPEAN PATENT APPLICATION

(21) Application number: **81110139.3**

(22) Date of filing: **04.12.81**

(51) Int. Cl.³: **G 11 B 3/60**
**G 11 B 17/02**

(43) Date of publication of application:
**15.06.83 Bulletin 83/24**

(84) Designated Contracting States:
**CH DE FR LI**

(71) Applicant: **LUX CORPORATION**
**1-1, 1-chome, Shinsenri-Nishimachi**
**Toyonaka-shi Osaka(JP)**

(72) Inventor: **Toyoshima, Shigeru**
**196 Ishimaru Minoh-shi**
**Osaka(JP)**

(72) Inventor: **Uehara, Susumu**
**1-3-33, Kiyoshikojin**
**Takarazuka-shi Hyogo-ken(JP)**

(74) Representative: **Fleuchaus, Leo, Dipl.-Ing. et al,**
**Fleuchaus & Wehser Melchiorstrasse 42**
**D-8000 München 71(DE)**

(54) **Record player.**

(57) A record player whereby a record (6) is fixed by suction on a record suction face (5) of a turntable (3) using a suction pumping means (15).

The suction pumping means (15) comprises an air chamber (16) arranged in a turntable (3) and enclosed air-tightly by walls including a movable wall (20), resilient members (17) for urging the movable wall (20) of air chamber (16) so as to increase the volume of air chamber (16), and a pump operating means (18) for moving the movable wall (20) of air chamber (16) against the urging force of resilient members (17) in a direction in which the volume of air chamber (16) is decreased, leaving the movable wall (20) and resilient members (17) released at a predetermined position.

FIG.2

## Background of the Invention

1. Field of the Invention:

The present invention relates to an improvement of record player and, more particularly, a record player capable of reliably and tightly fixing the record on a turntable by suction.

2. Description of the Prior Art:

The conventionally well known record player has such an arrangement that the turntable is covered by a sheet made of rubber, for example, and the record is mounted on the rubber sheet. However, when the record is even slightly curved, the curved portion of record can not tightly contact the sheet, floating from the sheet. Therefore, when the turntable is rotated under such condition, deflection is caused to the record by the pressure of needle, thus causing the record to be resonated to effect bad influence on the sound reproduced.

In order to eliminate this drawback is now considered a record player including a record suction face having suction holes on the upper surface of turntable and formed in ring shape corresponding to the groove portion of record which is to be mounted on the turntable, sealing pads arranged in ring shape at inner and outer circumferences on the record suction face so as to tightly contact the underside of record, and a suction pump communicated through suction holes with a space formed by sealing pads between the underside of record and the record suction face. In the case of record player having such arrangement, when the record is mounted on the turntable and air in the space on the turntable is sucked by the suction pump, the record is drawn onto the record suction face on the turntable and made tightly integral to the turntable. Therefore, the resonance of record can be effectively prevented, thus allowing the reproduced sound to have high clarity and stability.

However, in the case of this conventionally considered record player wherein the suction pump is arranged on the side of player body and is communicated with suction holes through an air path formed at the rotating shaft by which the turntable is carried and supported, the construction of rotating shaft and its surroundings becomes complicated and unless careful attention is paid to the sealing between rotating and stationary portions, air leakage is caused, thus making it impossible to keep on the suction of record for a long time. On the other hand, when the sealing is made complete, relatively large load is added to the rotation of turntable to thereby effect bad influence on the performance of driving motor.

## Summary of the Invention

It is therefore an object of the present invention to provide a record player simple in construction and capable of reliably and tightly fixing by suction the record on a turntable for a long time.

Another object of the present invention is to provide a record player capable of effectively preventing air leakage from being caused between the record and suction holes on a record suction face.

A further object of the present invention is to provide a record player capable of tightly fixing by suction the record on a suction face so as not to add unnecessary load to a turntable driving motor.

These objects of the present invention can be achieved by a record player provided with a suction pump means in a turntable wherein the suction pump means comprises an air chamber enclosed by an airtight wall including a movable wall and communicated with suction holes on a record suction face, resilient members for urging the movable wall of air chamber in the direction of increasing the volume of air chamber, and a pump operating means for moving the movable wall of air chamber against the urging action of resilient members in the direction of decreasing the volume of air chamber and also for releasing the movable wall and resilient member free at a predetermined position.

Other objects, merits, features and uses of the present invention will become more apparent from the following detailed description with reference to the accompanying drawings.

## Brief Description of the Drawings

Figs. 1 through 10 illustrate a preferred embodiment of the present invention in which Fig. 1 is a plan view showing a turntable, Fig. 2 a longitudinally sectioned view showing the turntable on which no record is mounted, Fig. 3 a sectional view showing a cam section arranged in a pump operating means, Fig. 4 a front view showing a supporting member in the cam section, Fig. 5 a perspective view showing the whole of turntable dismantled, and Figs. 6 through 10 plan views showing a latch section in the pump operating means;

Figs. 11 and 12 illustrate another embodiment of the present invention, in which Fig. 11 is a plan view showing a turntable and Fig. 12 a longitudinal sectioned view showing the turntable; and

Fig. 13 illustrates a further embodiment of the present invention and is a longitudinally sectioned view showing a turntble.

## Detailed Description of the Preferred Embodiments

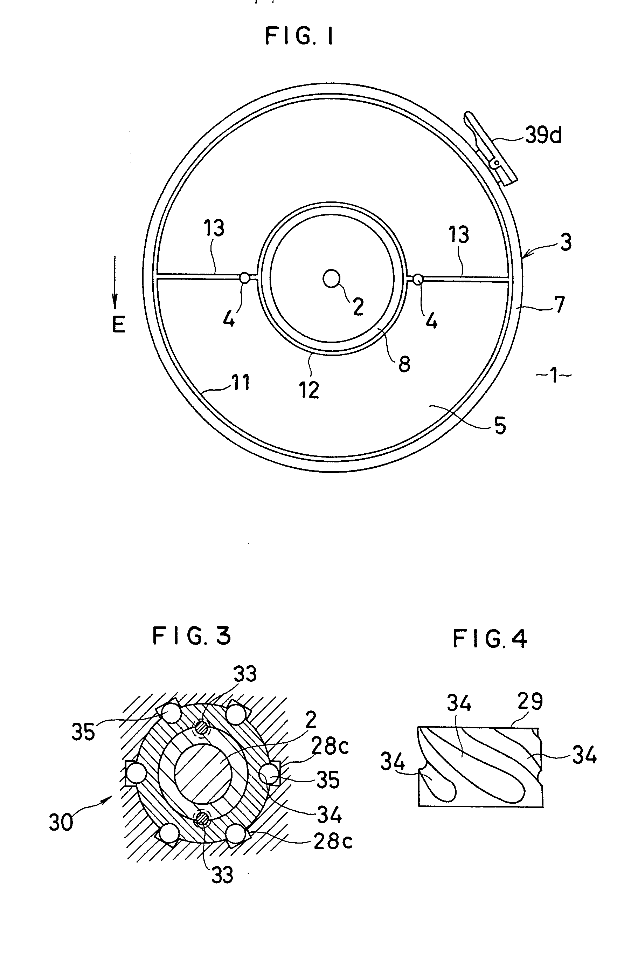

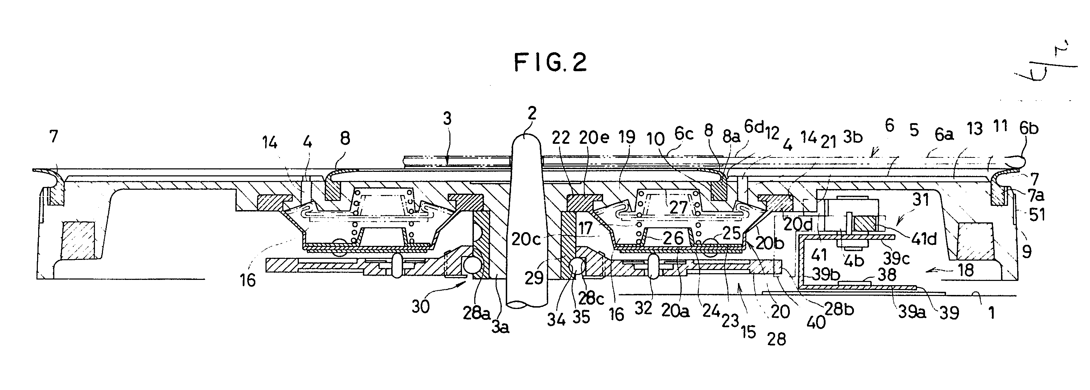

An embodiment of the present invention will be now described referring to Figs. 1 through 10.

Figs. 1 through 5 show the construction of a turntable. The turntable 3 is attached to a rotating shaft 2 projected from a player body 1 and has a flat record suction face 5 provided with suction holes 4. This record suction face 5 has a ring shape corresponding to the groove section 6a of a record 6 mounted on the turntable 3.

Numerals 7 and 8 represent ring-shaped sealing pads arranged at outer and inner circumferences of record suction face 5 on the turntable 3. Each of sealing pads 7 and 8 is made of resilient material such as neoprene and silicone rubber, for example, and has a tongue-like shape when viewed in cross section as shown in Fig. 2. These sealing pads 7 and 8 have, as their bases, attaching portions 7a and 8a formed rectangular in cross section and integral to their respective tongue-shaped portions. These attaching portions 7a and 8a of sealing pads 7 and 8 are respectively fitted into ring-shaped grooves 9 and 10 formed on the turntable 3. The foremost end of each of sealing pads 7 and 8 is inclined bowing in the direction of departing from the record suction face 5 and resiliently deformed toward the record suction face 5 by the weight of a record 6 when the record 6 is mounted on the turntable 3.

Under the condition shown in Fig. 2 and under which the record 6 is not sucked onto the record suction face 5, the outer sealing pad 7 closely contacts the underside of outer circumference 6b of record 6 while the inner sealing 8 the underside of label-attached portion 6c or no-sound-recorded groove portion 6d of record 6. Between the outer circumference of record suction face 5 and the sealing pad 7 is formed an outer circumferential groove 11 by chamfering the outer circumference of record suction face 5, while between the inner circumference of record suction face 5 and the sealing pad 8 an inner circumferential groove 12 by chamfering the inner circumference of record suction face 5, each of these grooves 11 and 12 being of V-shape in cross section and formed in a ring. Elongated grooves 13 and 13 each crossing each of suction openings 4 and extending radially are formed on that portion of record suction face 5 at which suction openings 4 are arranged and communicate the outer circumferential groove 11 with the inner circumferential groove 12

A suction pump means 15 comprises an air chamber 16 arranged under the turntable 3, resilient members housed in the air chamber 16 and consisting of plural coil springs 17, and a pump operating means 18 for acting on coil springs 17 and the air chamber 16 to render the pumping function operative, and is communicated with suction openings 4 via air paths 14 which passes through the turntable 3.

The air chamber 16 is an airtight and ring-shaped space formed by a fixed wall 19, which forms the underside of turntable 3, and a ring-shaped movable wall 20 of high flexibility, which is concentric with the turntable 3 and attached to the underside of fixed wall 19. The lower end of each of air paths 14 communicating with suction openings 4 is opened. at the air chamber 16.

The movable wall 20 includes a floor 20a, outer and inner wall portions 20b and 20c inclinedly erecting from outer and inner circumferences of floor 20a, respectively, and attaching portions 20d and 20e formed integral to upper rims of outer and inner wall portions 20b and 20c, respectively, and hook-shaped in cross section. The movable wall 20 is made of rubber or the like. Attaching portions 20d and 20e are respectively fitted into ring-shaped grooves 21 and 22 formed on the underside of turntable 3. The floor 20a is sandwiched between upper and lower shape-holding plates 23 and 24 made of steel plate or the like and these floor 20a and upper and lower shape-holding plates 23 and 24 are made integral by means of rivets. A plurality of circular projections 26 having same pitch therebetween are embossed on the upper shape-holding plate 23 along the circumferential direction thereof, and recesses 27 are formed on the underside of fixed wall 19 corresponding to respective circular projections 26. The upper portion of each of coil springs 17 is housed in its corresponding recess 27 while the lower portion thereof is fitted onto its corresponding circular projection 26, so that the movable wall 20 is urged downwards by the action of coil springs 17.

The pump operating means 18 comprises an elevating disc 28 arranged under the movable wall 20 of air chamber 16, a support member 29 fitted onto a boss portion 3a of turntable 3 and supporting the elevating disc 28 rotatable and liftable, a cam mechanism 30 arranged between the support member 29 and elevating disc 28 to convert the relative rotation movement between the elevating disc 28 and turntable 3 to the up-and-down movement of elevating disc 28, and a latch mechanism 31 for temporarily holding the elevating plate 28 and turntable 3 non-rotatable at a position where the elevating disc 28 is lifted to its maximum and releasing the elevating disc 28 and turntable 3 by a predetermined manual operation.

The elevating disc 28 is formed in a ring corresponding to the air chamber 16 and has a plurality of pushing wheels 32 contacted with the underside of movable wall 20 of air chamber 16 e.g. the underside of lower shape-holding plate 24 and arranged on the upper surface thereof with same distance spaced therebetween in the circumferential direction thereof. The support member 29 is formed in a cylinder and fitted onto the outer circumference of boss portion 3a of turntable 3 and fixed to the turntable 3 by means of bolts 33 and 33, as shown in Figs. 3 and 4. Each of bolts 33 is inserted like a key between the inner circumference of support member 29 and the other circumference of boss portion 3a and can also stop the rotation of support member 29. The elevating disc 28 is fitted onto the outer circumference of support member 29 so as to enable the elevating disc 28 to slide up and down around and along the support member 29.

As shown in detail in Fig. 3, the cam mechanism 30 includes a plurality of spiral cam grooves 34 formed on the outer circumference of support member 29 with same angle spaced from one another in the circumferential direction of support member 29, a plurality of recesses 28c formed on the inner circumference of axial hole 28a of elevating disc 28 and corresponding to cam grooves 34, respectively, and follower balls 35 each housed in each of recesses 28c and slidably fitted into its corresponding cam groove 34.

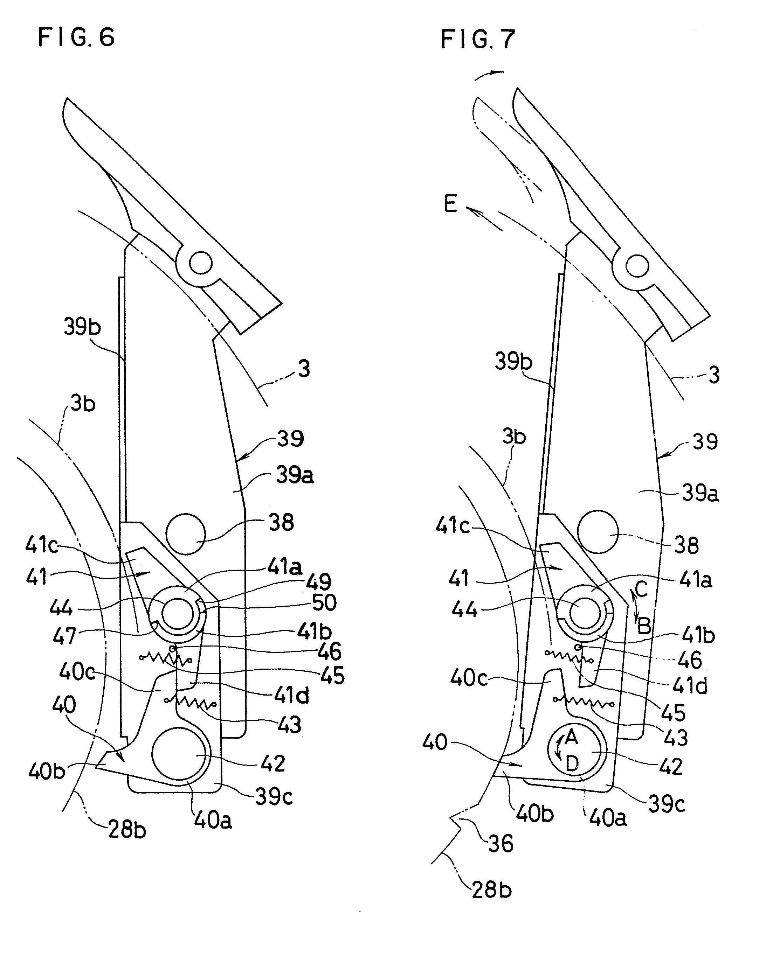

As shown in detail in Figs. 6 through 10, the latch mechanism 31 comprises a first engaging recess 36 formed on the outer circumference 28b of elevating disc 28, a second engaging recess 37 formed on the outer circumference 3b of a stepped portion which is formed in a ring on the underside of turntable 3, a rotatable arm 39 attached on the player body 1 by means of a support rod 38 with its one end side facing outer circumferences 28b and 3b, a first engaging claw 40 arranged at one end of rotatable arm 39 to engage with the first engaging recess 36, and a second engaging claw 41 arranged adjacent to the first engaging claw 40 at the one end of rotatable arm 39 to engage with the second engaging recess 37.

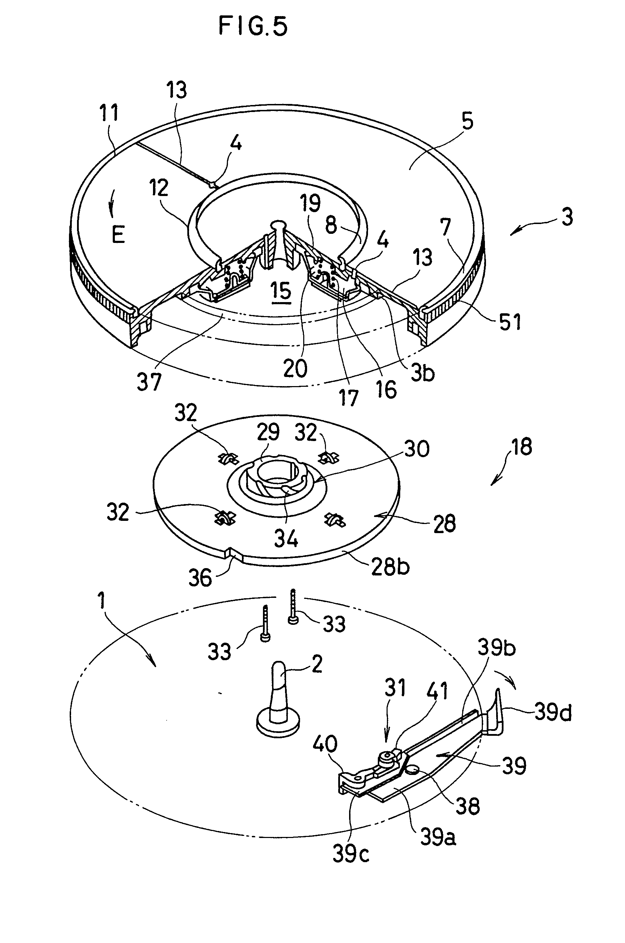

The rotatable arm 39 is formed in a lever as shown in Fig. 5, and includes a base plate 39a supported at the center thereof by the support rod 38 and rotatable in the horizontal direction, a side plate 39b erected from one side end of base plate 39a, and a roof plate 39c projected horizontally above the base plate 39a from the upper edge of one end of side plate 39b. The rotatable arm 39 is temporarily held by a temporarily holding mechanism (not shown) at a position where the rotatable arm 39 is ready for operation and at another position where the rotatable arm 39 is under operation. The other end of base plate 39a of rotatable arm 39 extends outside the turntable 3 and has a manually operating handle 39d attached thereto.

As shown in Figs. 6 and 7, the first engaging claw 40 includes an attaching portion 40a attached onto the roof plate 39c of rotatable arm 39 through a support rod 42, a claw portion 40b projected from the outer circumference of attaching portion 40a toward the outer circumference 28b of elevating plate 28, and a connecting portion 40c projected from the outer circumference of attaching portion 40a toward the second engaging claw 41. The first engaging claw 40 is urged by a first spring 43 in a direction shown by an arrow A in Fig. 7. The foremost end of claw portion 40b is made long in the vertical direction so as to cover the distance during which the elevating plate 28 goes up and down.

The second engaging claw 41 includes upper and lower attaching portions 41a and 41b attached onto the roof plate 39c of rotatable arm 39 through a common support rod 44, a claw portion 41c projected from the outer circumference of upper attaching portion 41a toward the outer circumference 3b of turntable 3, and a connecting portion 41d projected from the outer circumference of lower attaching portion 41b toward the first engaging claw 40. The second engaging claw 41 is urged by a second spring 45 in a direction shown by an arrow B in Fig. 7. The one end side of connecting portion 41d of second engaging claw 41 is contacted with that of connecting portion 40c of first engaging claw 40. The urging force which the second spring 45 adds to the second engaging claw 41 in the direction B is set larger than the urging force which the first spring 43 adds to the first engaging claw 40 in the direction A, so that the second engaging claw 41 is forced in the direction B till it contacts a stopper pin 46 projected from the roof plate 39c of rotatable arm 39, and stably held there as shown in Fig. 6.

Upper and lower attaching portions 41a and 41b of second engaging claw 41 are arranged to be independently rotatable around the support rod 44, and when the upper attaching portion 41a is rotated in a direction shown by an arrow C in Fig. 7, one stopper end face 47 of upper attaching portion 41 is contacted with one stopper end face 48 of lower attaching portion 41b while when the upper attaching portion 41a is rotated in the direction B, the other stopper end face 49 of upper attaching portion 41a is contacted with the other stopper end face 50 of lower attaching portion 41b. A spring (not shown) is interposed between upper and lower attaching portions 41a and 41b to force the upper attaching portion 41a in the direction B shown in Fig. 7. The player body 1 has a switch to turn ON the power source of driving motor when the rotatable arm 39 is kept ready for operation and to turn OFF the power source of driving motor when the rotatable arm 39 is under operation.

The operation of record player having such arrangement as described above will be now successively described starting from a stage before the record 6 is mounted on the turntable 3 and ending in a stage at which the record 6 is fixed by suction on the turntable 3 and performance is to start.

When the rotatable arm 39 is kept ready for operation, first and second engaging claws 40 and 41 are left apart from the elevating disc 28 and turntable 3, thus keeping the elevating disc 28 and turntable 3 freely rotatable. Therefore, the movable wall 20 of air chamber 16 is urged downwards by the action of coil springs 17 keeping the elevating disc 28 at the lowest position (a condition shown by solid lines in Fig. 2).

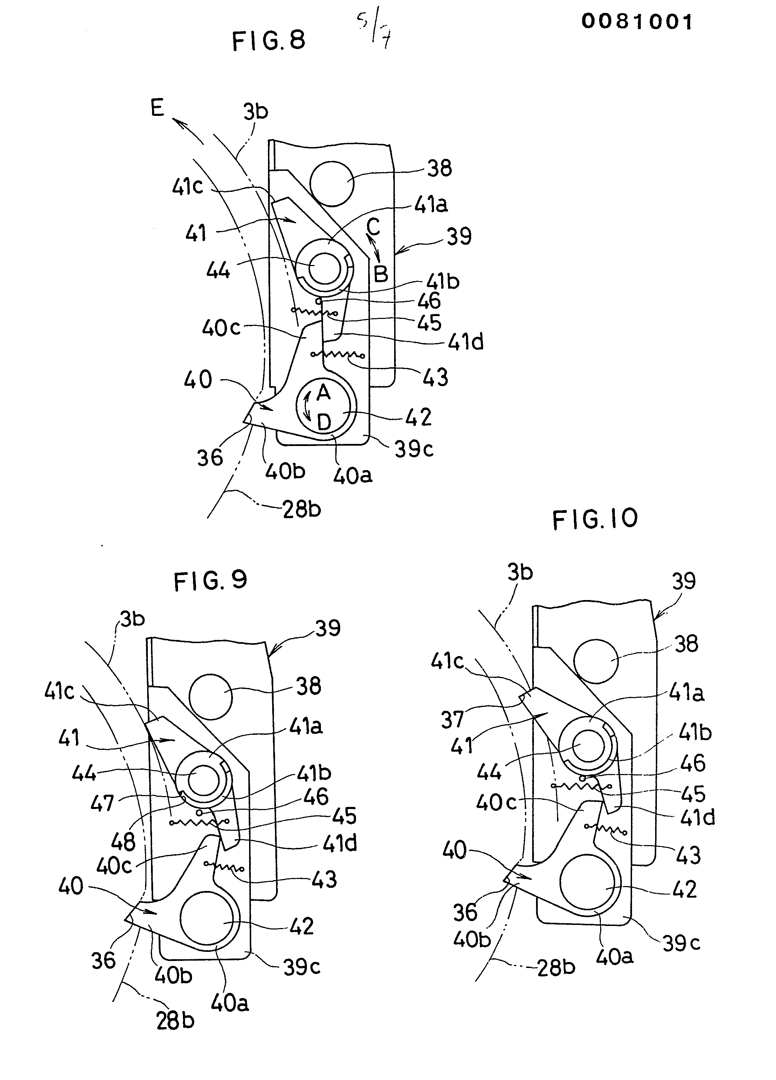

When the handle 39d of rotatable arm 39 is turned in the direction of its departing from the turntable 3 to move the rotatable arm 39 to the operating position thereof, the claw portion 40b of first engaging claw 40 is forced against the outer circumference 28b of elevating disc 28, as shown in Fig. 7. Since it is rotatable, the engaging claw 40 is rotated back by the reaction of outer circumference 28b in a direction shown by an arrow D in Fig. 7 against the urging force of first spring 43 and the claw portion 40b of engaging claw 40 is thus slidably contacted with the outer circumference 28b at an appropriate contact pressure in this case. When the turntable 3 is then manually rotated in not-driven direction e.g. a direction shown by an arrow E in Fig. 7, the first engaging recess 36 formed on the outer circumference 28b of elevating disc 28 rotating together with the turntable 3 is brought to a position opposite to the first engaging claw 40 and engaged with the claw portion 40b of first engaging claw 40 as shown in Fig. 8. When the turntable 3 is further rotated in the direction E, the first engaging claw 40 is pressed by the elevating disc 28 rotating with the turntable and rotated in the direction A, causing the second engaging claw 41 to be rotated in the direction C against the urging force of second spring 45 as shown in Fig. 8. The first engaging claw 40 itself is contacted with the foremost end of rotatable arm 39 at a predetermined position to limit the rotation of elevating disc 28 in the direction E.

When the second engaging claw 41 is rotated in the direction C, the claw portion 41c of engaging claw 41 is pressed against the outer circumference 3b of turntable 3. The claw portion 41c and upper attaching portion 41a of engaging claw 41 are arranged rotatable independently of connecting portion 41d and lower attaching portion 41b thereof and therefore rotated by the reaction of outer circumference 3b in the direction B against the urging force of spring (not shown), thus enabling the claw portion 41c to be slidably contacted with the outer circumference 3b at an appropriate contact pressure. When the turntable 3 is still further rotated in the direction E, relative rotating movements are caused between the turntable 3 and the elevating disc 28 because the rotation of elevating disc 28 is limited by the first engaging claw 40 as described above, so that follower balls 35 held by the elevating disc 28 start to rise along their respective cam grooves 34 formed on the support member 29. The elevating disc 28 is thus elevated causing pushing wheels 32 arranged on the elevating disc 28 to lift the movable wall 20 of air chamber 16 upwards (a condition shown by virtual lines in Fig. 2). As the result, the volume of air chamber 16 is reduced and air in the air chamber 16 is discharged outside through air paths 14 and suction openings 4. When the elevating disc 28 is elevated to the highest position, the second engaging recess 37 formed on the outer circumference 3b of turntable 3 comes to a position opposite to the second engaging claw 41. Therefore, the claw portion 41c of second engaging claw 41 is engaged with the second engaging recess 37 as shown in Fig. 10 and this condition is thereafter kept even if the hand of operator is removed from the turntable 3. In this example of record player according to the present invention, stroboscopic grooves 51 are formed on the outer circumference of turntable 3 to serve as a non-skid face at the time when the turntable 3 is rotated by hand. If necessary, a stopper mechanism for limiting relative rotating movements of turntable 3 and elevating disc 28 may be arranged between the turntable 3 and the elevating disc 28 to prevent only the turntable 3 from being unreasonably rotated in the direction E from the condition shown in Fig. 10.

As described above, the volume of air chamber 16 is kept reduced at the position shown in Fig. 10 even if the turntable 3 and rotatable arm 39 are left untouched by hand. When the record 6 is then mounted on the turntable 3 and the handle 39d is moved toward the turntable 3 to return the rotatable arm 39 to its ready-for-operation position shown in Fig. 6, the first engaging claw 40 is released from the first engaging recess 36 while the second engaging claw 41 from the second engaging recess 37, thus leaving the turntable 3 and elevating disc 28 freely rotatable. Therefore, the movable wall 20 of air chamber 16 is quickly pushed down by the action of coil springs 17 to thereby increase the volume of air chamber 16. As the result, air on the turntable 3 is sucked into the air chamber 16 through suction openings 4 and air paths 14 and barometric pressure in the space closed by the underside of record 6 and sealing pads 7, 8 is reduced, so that the record 6 is caused to adhere onto the metallic record suction face of turntable 3 to make the record 6 and turntable 3 reliably integral to each other. As the underside of record 6 comes nearer to the record suction face 5, it becomes more difficult that air flows on the record suction face 5 toward suction openings 4. In this example of record player, however, outer and inner grooves 11 and 12 are respectively formed in a ring at outer and inner circumferences on the record suction face 5 between sealing pads 7 and 8 and connected with each other by grooves 13 each crossing the suction opening 4. Therefore, air on the record suction face 5 is allowed to smoothly flow along these grooves 11, 12 and 13 to suction openings 4. The power source of driving motor is turned ON at the time when the rotatable arm 39 is returned to the position ready for operation and performance is now ready to be played.

As apparent from the above, the record suction face 5 having suction openings 4 is formed in a ring on the upper surface of turntable 3, sealing pads 7 and 8 tightly contacting the underside of record 6 are provided at inner and outer circumferences on the record suction face 5, and the record 6 is fixed on the turntable 3 by the sucking action of suction pumping means 15 communicated with suction openings 4. The record player of the present invention having such arrangement therefore enables the resonance of record 6 to be effectively prevented and the sound of high clarity and stability to be reproduced. In addition, the suction pumping means 15 includes the air chamber 16 connected to suction openings 4 and whose volume is variable, coil springs 17 for increasing the volume of air chamber 16, and the pump operating means 18 for leaving coil springs 17 and air chamber 16 operative to cause the air chamber 16 to achieve certain pumping action. Therefore, the suction of air is carried out using the repelling speed and force of coil springs 17. This is the reason why the suction of air can be achieved at a higher and more constant speed and the record 6 can be more reliably and strongly fixed on the record suction face 5 keeping to the lowest extent the air leakage at sealing pads when the suction of air is started, as compared with the case where the movable wall 20 is manually moved in the direction in which the volume of air chamber 16 is increased to thereby suck air on the turntable 3. The movable wall 20 of air chamber 16 does not go down to the lowest position at the stage where the record 6 is sucked onto the record suction face 5, but stops at a height where barometric pressure is balanced with the urging force of coil springs 17, so that air on the turntable 3 is continuously sucked by the urging force of coil springs 17 added to the movable wall 20. Even if a little amount of air is leakingly entered into at sealing pads 7 and 8, coil springs 17 further push down the movable wall 20 corresponding to the amount of air entered, thus enabling the barometric pressure on the turntable 3 to be prevented from rising. Therefore, the record 6 can be fixed by suction on the turntable 3 with substantially same sucking force and for a long time without keeping a suction pump driven by a motor or the like. In addition, the air chamber 16 and coil springs 17 of suction pumping means 15 are not arranged on the side of player body 1 but on the side of turntable 3 in the record player of the present invention, so that air paths 14 for communicating the suction pumping means 15 with suction openings 4 may be extremely simple, making it unnecessary to form air paths passing through the rotating shaft 2. This serves to eliminate such disadvantages that the arrangement of rotating shaft becomes complicated and that unnecessary load is added to the driving motor because of sealing arrangement of rotating shaft.

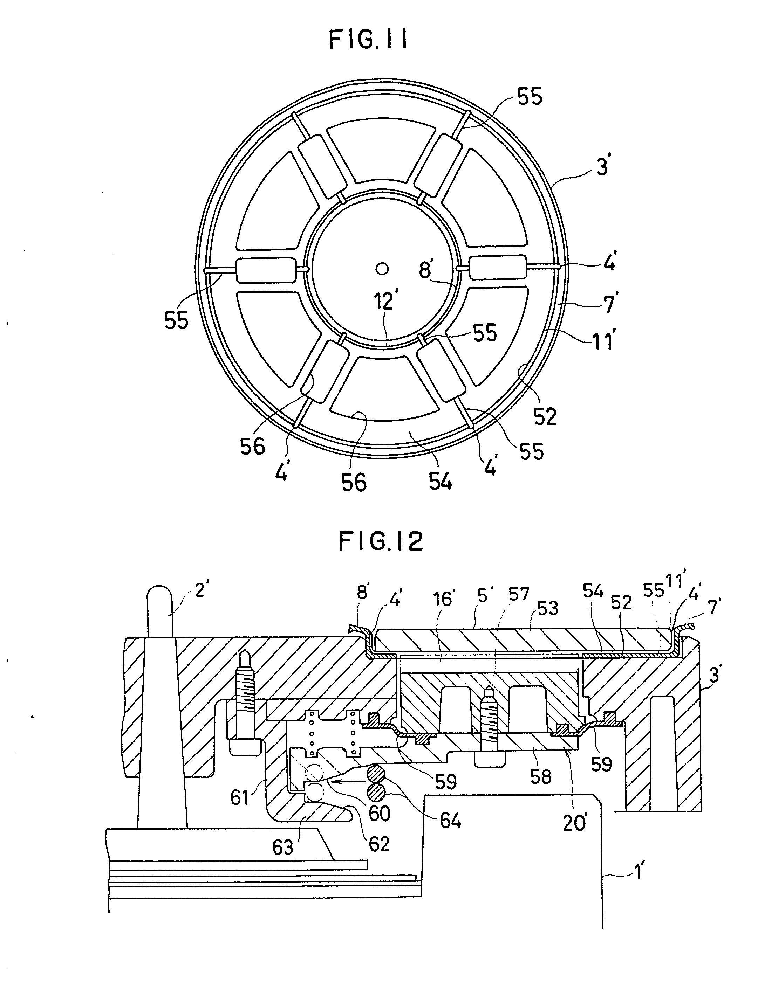

Although the record suction face is formed integral to the turntable in the first embodiment of the present invention, it should be understood that the present invention is not limited to this embodiment but includes those shown in Figs. 11 and 12, for example. Figs. 11 and 12 show a second embodiment of the present invention. A recessed portion 52 is formed in a ring on the upper surface of turntable 3' corresponding to the grooved portion of record and a ring-shaped member 53 made of glass or ceramics is fitted into the recessed portion 52 in such a way that the upper surface of ring-shaped member 53 is used as a record suction face 5'. Outer and inner sealing pads 7' and 8' are made integral to each other using a sheet member 54 which is sandwiched between the inner face of recessed portion 52 and the ring-shaped member 53 and which has a plurality of grooves 55 radially formed on the inner face thereof. Air paths 14' for communicating suction openings 4' with an air chamber 16' are formed by these grooves 55 and the outer face of ring-shaped member 53. Suction openings 4' are opened at outer and inner circumferences of record suction face 5', respectively, and suction openings 4' arranged on the side of outer circumference of record suction face 5' are communicated with one another by an outer circumferential groove 11' similar to that in the first embodiment while suction openings 4' arranged on the side of inner circumference of record suction face 5' are communicated with one another by an inner circumferential groove 12'. According to the second embodiment of the present invention having such arrangement as described above, the record (not shown) can be sucked onto the record suction face 5' of ring-shaped member 53 and the ring-shaped member 53 can be further sucked into the recessed portion 52 by increasing the volume of air chamber 16', which serves as a suction pumping means 15', so that the ring-shaped member 53 and record can be strongly fixed on the turntable 3'. As the ring-shaped member 53 is made of glass or ceramics, the record suction face 5' can be made extremely smooth and hard in this case. Therefore, the resonance of record can be effectively prevented.

The arrangement of air chamber is not also limited to the one employed in the first embodiment but may be the other one shown in Figs. 11 and 12. As shown in Figs. 11 and 12, a movable wall 20' comprises a piston 57 housed in a window 56 of turntable 3', a support plate 58 for supporting the piston 57 thereon, and sealing rings 59 each being made of resilient material and having its one end sandwiched between the support plate 58 and the piston 57 and its other end fixed to the underside of turntable 3'. The volume of air chamber 16' is changed by lifting and lowering the support plate 58.

The resilient members are not also limited to coil springs.

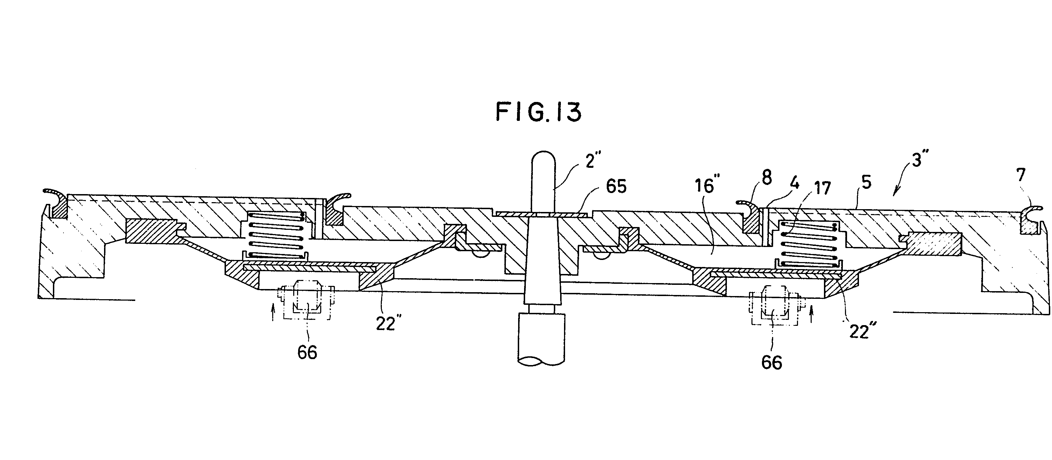

The arrangement of pump operating means is not also limited to the one employed in the first embodiment, but may be those shown in Figs. 12 and 13, for example. Referring to Fig. 12, an outer portion of underside of support plate 58 is inclined to form an inclined face 60 and a collar portion 63 having an inclined face 62 opposite to the inclined face 60 is projected in a ring shape from the lowermost end of a guide cylinder 61 which guides the support plate 58. By forcing transverse rods 64 between these inclined faces 60 and 62, the support plate 58 is lifted to reduce the volume of air chamber 16', said transverse rods 64 being supported by a reciprocating mechanism (not shown) so as to move in the horizontal direction and said reciprocating mechanism being mounted on the player body 1'. When plural sets of transverse rods 64 are arranged symmetrical to one another and operated at the same time in this case, undesired force will not be added to a rotating shaft 2' in the horizontal direction.

Fig. 13 shows a third embodiment of the present invention wherein a turntable 3" having an air chamber 16" substantially similar to the one shown in Figs. 1 through 10 is attached to a rotating shaft 2" by a stopper ring 65 or the like so as not to come out of rotating shaft 2" upwards and a movable wall 20" of air chamber 16" is pushed upwards by pushing wheels 66 supported by a lifting means (not shown) arranged on the player body.

The present invention can also be embodied as shown in Figs. 11 through 13 to thereby achieve same effect as the first embodiment of the present invention can.

What we claim is:

1. A record player including a turntable having a ring-shaped record suction face substantially corresponding to the grooved portion of a record and suction openings, ring-shaped sealing pads mounted on the turntable and arranged at the outer and inner circumferences of said record suction face so as to enable the underside of said record to be contacted with, and a suction pumping means communicated with said suction openings through air paths so as to suck the record onto the record suction face, characterized in that said suction pumping means comprises an air chamber airtightly enclosed by walls including a movable wall, arranged in the turntable and communicated with the air paths; resilient members arranged in the turntable and serving to urge the movable wall of said air chamber in a direction in which the volume of said air chamber is increased; and a pump operating means for moving the movable wall against the urging force of said resilient members in a direction in which the volume of said air chamber is decreased, and leaving the movable wall and resilient members released at a predetermined position.

FIG. 1

FIG. 3

FIG. 4

# FIG.2

## FIG.5

FIG.6

FIG.7

FIG. 8    5/7    0081001

FIG. 8

FIG. 9

FIG. 10

## FIG.11

## FIG.12

FIG.13

European Patent Office

**EUROPEAN SEARCH REPORT**

**0081001**

Application number

EP 81 11 0139

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| A | FR-A-2 268 327 (SONY CORP.) | 1 | G 11 B    3/60<br>G 11 B   17/02 |
| | --- | | |
| A | US-A-4 065 135 (DOUGHTY) | 1 | |
| | --- | | |
| A | US-A-4 234 195 (SHIBATA) | 1 | |
| | --- | | |
| A | PATENTS ABSTRACTS OF JAPAN, vol. 5, no. 84(P-64)(756)<br>& JP - A - 56 29806 (HIDEYO OKA) 25-03-1981 | 1 | |
| | --- | | |
| A | FR-A-2 417 162 (PHILIPS) | 1 | |
| | ----- | | |

**TECHNICAL FIELDS SEARCHED (Int. Cl. ³)**

G 11 B

The present search report has been drawn up for all claims

| Place of search | Date of completion of the search | Examiner |
|---|---|---|
| THE HAGUE | 27-07-1982 | SANDRI S.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82